**Europäisches Patentamt**

**European Patent Office**

**Office européen des brevets**

(19)

(11) Veröffentlichungsnummer: **0 126 466**
**A1**

## (12) EUROPÄISCHE PATENTANMELDUNG

(21) Anmeldenummer: **84105711.0**

(22) Anmeldetag: **18.05.84**

(51) Int. Cl.³: **F 02 B 37/00**

(30) Priorität: **18.05.83 DE 3318136**

(43) Veröffentlichungstag der Anmeldung: **28.11.84**
**Patentblatt 84/48**

(84) Benannte Vertragsstaaten: **DE FR GB IT SE**

(71) Anmelder: **Schatz, Oskar, Dr.-Ing., Waldpromenade 16,
D-8035 Gauting (DE)**

(72) Erfinder: **Schatz, Oskar, Dr.-Ing., Waldpromenade 16,
D-8035 Gauting (DE)**

(74) Vertreter: **Lamprecht, Helmut, Dipl.-Ing.,
Corneliusstrasse 42, D-8000 München 5 (DE)**

(54) **Abgaslader zur Ladung von Verbrennungsmotoren.**

(57) Ein Abgaslader zur Ladung von Verbrennungsmotoren mit einer Laderkammer, die durch eine bewegliche Trennwand in eine mit einem Abgaseinlass und einem Abgasauslass versehene Abgaskammer und eine Ladeluftkammer mit einem Ladelufteinlass und einem Ladeluftauslass unterteilt ist, wobei der Trennwand eine dem Abgasimpuls entgegengerichtete Rückstellkraft zugeordnet ist und wobei gegebenenfalls im Abgasweg Mittel zur Veränderung der Impulsdauer und/oder Impulsfrequenz angeordnet sind.

- 1 -

Dr.-Ing. Oskar Schatz

D - 8035 Gauting

## Abgaslader zur Ladung von Verbrennungsmotoren

Die Erfindung betrifft einen Abgaslader zur Ladung von Verbrennungsmotoren mit einer Laderkammer, die durch eine bewegliche Trennwand in eine mit einem Abgaseinlaß und einem Abgasauslaß versehene Abgaskammer und eine Ladeluftkammer mit einem Ladelufteinlaß und einem Ladeluftauslaß unterteilt ist.

Durch Abgas antreibbare Verdrängerlader sind theoretisch bekannt. Für die praktische Verwirklichung stellt sich jedoch das Problem der Regelung der Luftmenge. Außerdem stößt die Nutzung der periodisch aus dem jeweiligen Motorzylinder austretenden Abgasenergie in vielen Fällen auf Schwierigkeiten. In manchen Fällen ist der am Lader zur

0126466

Verfügung stehende Abgasimpuls von zu geringer Verweildauer, um die Massenträgheit der Trennwand zu kompensieren, damit ein ausreichender Laderhub und ein ausreichender Wirkungsgrad erzielt werden kann.

Bei Vielzylindermotoren behindern sich die Abgaswellen der einzelnen Motorzylinder gegenseitig, so daß für die Bewegung der Trennwand durch die natürlichen Abgaswellen immer weniger nutzbares Energiegefälle zur Verfügung steht. Ein ähnlicher Effekt tritt bei erhöhter Motordrehzahl auf.

Aufgabe der Erfindung ist es, bei abgasgetriebenen Verdrängerladern eine praktikable und mit vertretbarem Aufwand realisierbare Luftmengenregelung zu schaffen. Die Lösung dieser Aufgabe besteht nach der Erfindung bei einem Abgaslader der eingangs erwähnten Art darin, daß der Trennwand eine dem Abgasimpuls entgegengerichtete Rückstellkraft zugeordnet ist, wobei eine vorteilhafte Ausgestaltung darin besteht, daß die Rückstellkraft derart bemessen ist, daß sich die Hublänge der Trennwand in Abhängigkeit von der Intensität der Abgasimpulse verändert. Damit die Abgasimpulse mit der Rückstellkraft in der erwünschten Weise zusammenwirken, ist eine Optimierung der zum Antrieb des Verdrängerladers dienenden Abgasimpulse unabhängig von der Zylinderzahl und der Motordrehzahl von Vorteil. Eine bevorzugte Ausführungsform besteht deshalb darin, daß im Abgasweg Mittel zur Veränderung der Impulsdauer und/oder Impulsfrequenz angeordnet sind.

0126466

Eine vorteilhafte Ausgestaltung besteht darin, daß der Abgasauslaß mit einer Drosselstelle versehen ist, wobei die Drosselstelle nach einer weiteren zweckmäßigen Ausführungsform hinsichtlich Druck und/oder Dauer der Drosselung steuerbar sein kann.

Nach einer anderen Ausführungsform kann der Abgaseinlaß oder der Abgasauslaß mit einem steuerbaren Ventil versehen sein.

Eine besonders vorteilhafte Ausgestaltung besteht darin, daß dem Abgaseinlaß der Abgaskammer ein Abgassammler vorgeschaltet und die Abgasseite des Laders mit einer Taktsteuerung versehen ist, wobei vorzugsweise die Abgasseite des Laders mit einem Einlaß- und/oder einem Auslaßventil versehen ist.

Vorzugsweise kann die der Abgasseite des Laders zugeordnete Steuerung mit einer elektronischen Regelung versehen sein, die Motor- und/oder Lader- und/oder Fahrzeugbetriebsdaten verarbeitet.

Falls diese Maßnahmen noch weiter unterstützt werden sollen, was z. B. bei Motoren mit sehr vielen Zylindern erforderlich werden kann, kann man nach einer vorteilhaften Ausgestaltung den Lader mit einer weiteren Abgaskammer versehen, der eine weitere bewegliche Trennwand zugeordnet ist, wobei beide Trennwände zu gemeinsamer Bewegung verbunden und in dem beide Abgaskammern jeweils

- 4 -

0126466

in entgegengesetzter Richtung mit Abgas beaufschlagbar sind. Damit kann die Zahl der auf eine Abgaskammer wirkenden Motorzylinder auf die Hälfte reduziert werden. In Verbindung mit den Maßnahmen zur Erhöhung der Impulsdauer bzw. zur Veränderung der Impulsfrequenz können damit auch schwierige Antriebsverhältnisse für Abgas-Verdrängerlader bewältigt werden. Eine ähnliche verfahrenstechnische Wirkung wird erreicht, wenn man mehrere Abgaslader einsetzt, die jeweils eine Abgaskammer und eine Ladeluftkammer aufweisen.

Anhand der nun folgenden Beschreibung der in der Zeichnung dargestellten Ausführungsbeispiele der Erfindung wird diese näher erläutert.

Es zeigt:

Fig. 1 einen Vierzylinder-Verbrennungsmotor mit einem durch Abgas betriebenen Verdrängerlader und einer einstellbaren Drossel am Abgasauslaß des Laders,

Fig. 2 einen Vierzylinder-Verbrennungsmotor mit einem durch Abgas betriebenen Verdrängerlader und einem Taktgeber für die Abgasimpulse und

Fig. 3 einen Vierzylinder-Verbrennungsmotor mit einem durch Abgas betriebenen Verdrängerlader, der eine zweite Abgaskammer mit einer zweiten Trennwand besitzt.

- 5 -

0126466

Ein insgesamt mit 10 bezeichneter Vierzylinder-Reihenmotor besitzt an jedem Zylinder ein Auslaßventil 12, 14, 16 und 18. Diese Ventile 12 bis 18 münden in eine gemeinsame Abgasleitung 20, die über einen Abgaseinlaß 22 in die Abgaskammer 24 eines Verdrängerladers 26 mündet. In der Laderkammer 28 des Verdrängerladers 26 ist eine Trennwand 30 in Form eines flachen Kolbens 32 beweglich angeordnet und außerhalb der Laderkammer 28 mittels einer Führungsstange 34 geführt, so daß Dichtung und Führung räumlich getrennt sind, was die Reibungsverluste im Lader auf ein Minimum reduziert und Wartung und Schmierung erleichtert.

Auf die Führungsstange 34 wirkt eine Feder 35, die die Trennwand in die obere Position zurückschiebt und die so ausgelegt sein kann, daß der Kolbenhub und damit die Luftfördermenge sich selbsttätig an die Belastung des Motors anpaßt, die durch die Intensität der Abgasimpulse angezeigt ist.

Auf der von der Abgaskammer 24 abgewandten Seite der Trennwand 30 ist eine Ladeluftkammer 36 mit einem Ladelufteinlaß 38 und einm Ladeluftauslaß 40 vorgesehen, die beide mit Rückschlagklappen versehen sind.

Der in die Abgaskamer 24 gelangende Abgasimpuls soll die Trennwand 30 gegen die Ladeluftkammer 36 treiben, um die Ladeluft aus der Ladeluftkammer 36 zu verdrängen. Eine auf den Abgasauslaß 42 der Abgaskammer 24 folgende, vorzugsweise hinsichtlich Druck un/oder Dauer der Drosselung einstellbare Drossel 44 ist geeignet, einen gegebenenfalls

- 6 -

0126466

wegen der zu überwindenden Massenträgheit der Trennwand 30 zu kurzen Abgasimpuls zeitlich zu verlängern bzw. die von einem zu schwachen Impuls auf die Trennwand 30 ausgeübte Kraft zu verstärken, so daß Ladeluft aus der Ladeluftkammer 36 verdrängt und über die Leitung 21 den Einlaßventilen 23, 25, 27 und 29 des Motors 10 zugeführt wird.

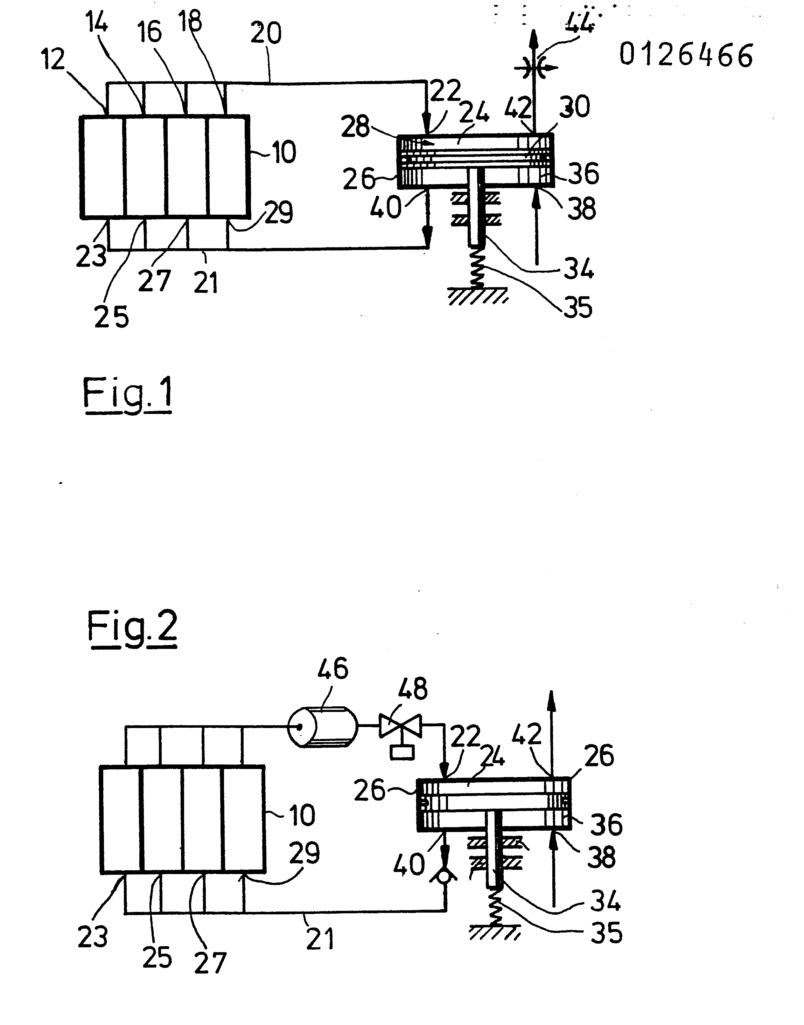

Fig. 2 zeigt eine ähnliche Anordnung wie Fig. 1, weshalb gleiche Teile mit gleichen Bezugszeichen gekennzeichnet sind. Es fehlt jedoch die Drossel 44 am Abgasauslaß 42 der Abgaskammer 24. Statt dessen sind in der Abgasleitung 20 zwischen dem Motor 10 und dem Verdrängerlader 26 ein Abgassammler 46 und ein durch eine Taktsteuerung betätigbares Ventil 48 angeordnet. Entsprechend den Abgasimpulsen, welche vor dem als Taktgeber dienenden Ventil 48 in die Abgaskammer 24 gelangen, wird durch die Trennwand 30 Ladeluft aus der Ladeluftkammer 36 verdrängt und gelangt über die Leitung 21 in den Motorzylinder, dessen Einlaßventil 23, 25, 27 oder 29 geöffnet ist. Die Taktsteuerung ist so abgestimmt, daß der vom Lader 26 ausgehende Druckimpuls jeweils während der Öffnungszeit eines Einlaßventils zum gewünschten Zeitpunkt am betreffenden Motorzylinder eintrifft. Der Ladeluftauslaß der Ladeluftkammer 36 kann hierbei ohne Rückschlagklappe ausgeführt sein.

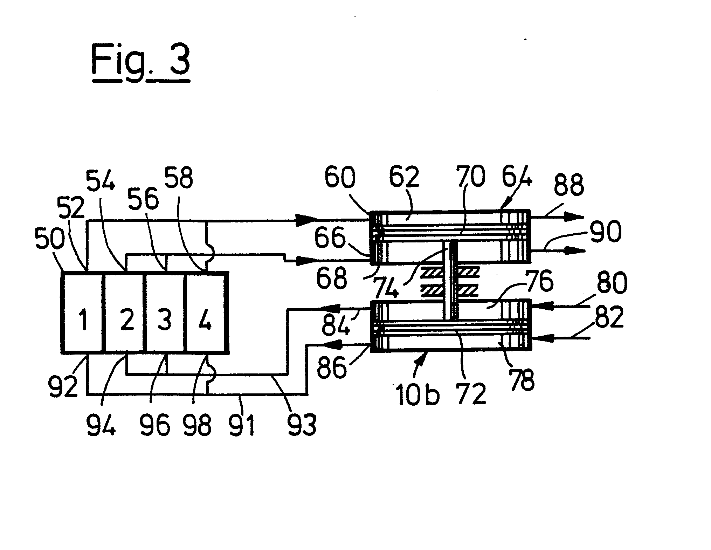

Die in Fig. 3 gezeigte Ausführungsform beschreitet einen anderen Weg zur Lösung des Problems, die Abgasimpulse zu optimieren. Sie geht davon aus, daß gemäß dem Stand der Technik Vierzylinder-Viertakt-Reihenmotoren aus Gründen des Massenausgleichs und zur Erzielung gleicher Zündab-

0126466

 stände der einzelnen Zylinder so ausgeführt werden, daß die Kolben der beiden außenliegenden Zylinder 1 und 4 mit gleichem Kurbelwinkel an der Kurbelwelle des Motors angeordnet sin, während die beiden innenliegenden Zylinder 2 und 3 um 180° versetzt sind. Somit bewegen sich die außenliegenden Kolben jeweils in derselben Richtung, während sich die innenliegenden Kolben genau entgegengesetzt bewegen. Durchlaufen z. B. die beiden außenliegenden Kolben gerade den unteren Totpunkt, dann durchlaufen zum gleichen Zeitpunkt die innenliegenden Kolben den oberen Totpunkt. Zu diesem Zeitpunkt ist bei Viertaktmotoren wegen der sog. Ventilüberschneidung das Einlaßventil des einen außenliegenden Zylinders noch offen, während das Auslaßventil des anderen außenliegenden Zylinders gerade geöffnet hat.

Von dem in Fig. 3 gezeigten Vierzylinder-Viertakt-Reihenmotor 50 sind die Auslaßventile 52 und 58 der beiden außenliegenden Zylinder 1 und 4 mit dem Abgaseinlaß 60 einer ersten Abgaskammer 62 eines Verdrängerladers 64 und die Auslaßventile 54 und 56 der beiden innenliegenden Zylinder mit dem Abgaseinlaß 66 einer zweiten Abgaskammer 68 verbunden. Die beiden Abgaskammern 62 und 68 liegen zu beiden Seiten einer ersten beweglichen Trennwand 70, die mit einer zweiten beweglichen Trennwand 72 über einen Führungsschaft 74 zu gemeinsamer Bewegung fest verbunden ist. Zu beiden Seiten der zweiten Trennwand 72 befinden sich zwei Ladeluftkammern 76 und 78 mit Ladelufteinlässen 80 bzw. 82 und Ladeluftauslässen 84 bzw. 86, die jeweils

0126466

mit Rückschlagklappen versehen sind. Die Ladeluftauslässe 84 bzw. 86 können auch ohne Rückschlagklappen ausgeführt sein. Die Abgasauslässe der Abgaskammern 62 und 68 sind mit 88 bzw. 90 bezeichnet.

Wird die Abgaskammer 62 mit Abgas beaufschlagt, wird der durch die Trennwände 70 und 72 gebildete Doppelkolben in Fig. 3 abwärts bewegt und es wird Luft aus der Ladeluftkammer 78 verdrängt und über eine Luftleitung 91 abwechselnd durch das Einlaßventil 92 oder 98 in den außenliegenden Zylinder 1 oder 4 geleitet, während bei der Abgasbeaufschlagung der Abgaskammer 68 der Doppelkolben 70, 72 eine gegenläufige Bewegung ausführt und Ladeluft aus der Ladeluftkammer 76 über eine Leitung 93 abwechselnd durch das Einlaßventil 94 oder 96 in den innenliegenden Zylinder 2 oder 3 schiebt. Der Verdrängerlader 64 arbeitet demnach derart, daß die Verhältnisse dem Laderbetrieb bei zwei Zweizylindermotoren entsprechen, die aus den jeweils paarweise zusammengefaßten Zylindern 1 und 4 bzw. 2 und 3 bestehen.

Entsprechend den oben geschilderten Verhältnissen beim Vierzylinder-Motor wird der Zylinder, dessen Auslaßventil geöffnet ist, die Luft durch den Abgasstoß jeweils in den Zylinder befördern, dessen Einlaßventil zum gleichen Zeitpunkt geöffnet ist, ohne daß hierzu ein besonderer Taktgeber erforderlich ist.

- 9 -

0126466

Die anhand der Fig. 1 und 2 einerseits und anhand der Fig. 3 andererseits erläuterten Maßnahmen lassen sich, soweit erforderlich, auch jeweils gemeinsam anwenden, um die Abgasimpulse zu optimieren.

Die Steuerung der Drossel 44 oder des Ventils 48 erfolgt vorteilhafterweise automatisch über eine elektronische Regelung, die Betriebsdaten des Motors und/oder des Laders und/oder des mit dem Motor anzutreibenden Fahrzeugs verarbeitet.

Vorzugsweise ist der Lader 26 oder 64 mit einer Dämpfung für die Dämpfung für die Bewegung der Trennwand 30 bzw. 70 versehen, die beispielsweise hydraulisch ausgebildet sein kann.

- 1 -

0126466

Patentansprüche:

1. Abgaslader zur Ladung von Verbrennungsmotoren mit einer Laderkammer, die durch eine bewegliche Trennwand in eine mit einem Abgaseinlaß und einem Abgasauslaß versehene Abgaskammer und eine Ladeluftkammer mit einem Ladelufteinlaß und einem Ladeluftauslaß unterteilt ist, dadurch gekennzeichnet, daß der Trennwand (30) eine dem Abgasimpuls entgegengerichtete Rückstellkraft zugeordnet ist.

2. Abgaslader nach Anspruch 1, dadurch gekennzeichnet, daß die Rückstellkraft derart bemessen ist, daß sich die Hublänge der Trennwand in Abhängigkeit von der Intensität der Abgasimpulse verändert.

3. Abgaslader nach einem der Ansprüche 1 oder 2, dadurch gekennzeichnet, daß im Abgasweg (22, 24, 42; 60, 66, 88, 90) Mittel (44; 46, 48; 62, 68) zur Veränderung der Impulsdauer und/oder Impulsfrequenz angeordnet sind.

4. Abgaslader nach Anspruch 3, dadurch gekennzeichnet, daß der Abgasauslaß (42) mit einer Drosselstelle (44) versehen ist.

5. Abgaslader nach Anspruch 4, dadurch gekennzeichnet, daß die Drosselstelle (44) hinsichtlich Druck und/oder Dauer der Drosselung steuerbar ist.

0126466

6. Abgaslader nach Anspruch 3, dadurch gekennzeichnet, daß der Abgaseinlaß (22) und/oder der Abgasauslaß (42) mit einem steuerbaren Ventil (48) versehen ist.

7. Abgaslader nach Anspruch 3, dadurch gekennzeichnet, daß dem Abgaseinlaß (22) der Abgaskammer (24) ein Abgassammler (46) vorgeschaltet und die Abgasseite (22, 42) des Laders (26) mit einer Taktsteuerung (48) versehen ist.

8. Abgaslader nach Anspruch 7, dadurch gekennzeichnet, daß die Abgasseite (22, 42) des Laders (26) mit einem Einlaß- (48) und/oder einem Auslaßventil versehen ist.

9. Abgaslader nach einem der vorhergehenden Ansprüche 3 - 7, dadurch gekennzeichnet, daß die der Abgasseite (22, 42) des Laders (26) zugeordnete Steuerung mit einer elektronischen Regelung versehen ist, die Motor- und/oder Lader- und/oder Fahrzeugbetriebsdaten verarbeitet.

10. Abgaslader nach einem der vorhergehenden Ansprüche, dadurch gekennzeichnet, daß der Lader (64) mit einer weiteren Abgaskammer (68) versehen ist, der eine weitere bewegliche Trennwand (72) zugeordnet ist, wobei beide Trennwände (70, 72) zu gemeinsamer Bewegung verbunden und in den beiden Abgaskammern (62, 68) jeweils in entgegengesetzter Richtung mit Abgas beaufschlagbar sind.

0126466

11. Abgaslader nach einem der vorhergehenden Ansprüche, dadurch gekennzeichnet, daß der Bewegung der
Trennwand (30, 72) eine Dämpfung zugeordnet ist.

Fig.1

Fig.2

0126466

0126466

# Fig. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A- 638 923 (CROSSLEY)  * Seite 2, Zeile 48 - Seite 3, Zeile 26; Figuren 1-5 * | 1,2,10 ,11 | F 02 B 37/00 |
| X | GB-A- 815 494 (CROSSLEY)  * Seite 1, Zeile 78 - Seite 2, Zeile 62; Figuren 1-9 * | 1,11 | |
| A | | 2,6 | |
| X | US-A-4 211 082 (BRISTOL)  * Spalte 4, Zeile 43 - Spalte 7, Zeile 53; Figuren * | 1-3,11 | |
| A | | 6 | RECHERCHIERTE SACHGEBIETE (Int. Cl. 3) |
| A | FR-A-2 465 076 (TIJOUX)  * Seite 1, Zeile 30 - Seite 2, Zeile 23; Figuren * | 1,6,10 | F 02 B |

Der vorliegende Recherchenbericht wurde für alle Patentansprüche erstellt.

| Recherchenort DEN HAAG | Abschlußdatum der Recherche 29-08-1984 | Prüfer HAKHVERDI M. |
|---|---|---|